# EUROPEAN PATENT SPECIFICATION

(11) **EP 1 396 662 B1**
(45) Date of publication and mention of the grant of the patent: **02.07.2014**
(21) Application number: 03020181.8
(22) Date of filing: 05.09.2003
(51) Int. Cl.: F16H 55/36, F02B 67/06

(54) **An integrated pulley-torsional damper assembly**
Eine integrierte Riemenscheibe-Torsionsdämpfer Vorrichtung
Assemblage intégré de poulie et amortisseur

(30) Priority: 06.09.2002 IT TO20020778
(43) Date of publication of application: 10.03.2004
(73) Proprietor: DAYCO EUROPE S.r.l., Chieti (IT)
(72) Inventor: Riu, Hervé, 38140 La Murette (FR)
(74) Representative: Franzolin, Luigi

(56) References cited:
- EP-A- 0 740 077
- DE-U- 20 000 343
- FR-A- 2 771 791

## Description

The present invention relates to an integrated pulley-torsional damper assembly.

Integrated pulley-torsional damper assemblies are known, which, in their most typical form, comprise a hub designed for being rigidly connected to a drive member, for example the drive shaft of an internal-combustion engine, a pulley connected to the hub by means of a first ring made of elastomeric material having the function of filter for the torsional oscillations, and a shock ring, connected to the hub by means of a second ring made of elastomeric material, which defines with the shock ring a damping system.

Integrated assemblies of the type described briefly above are used, for instance, in the automotive sector and are connected, at one end of the drive shaft of an internal-combustion engine to enable driving, by means of a belt transmission, of auxiliary members of the engine, for example, an alternator, a fan and/or a compressor of an air-conditioning system, and enable, at the same time, damping of the torsional oscillations of the drive shaft.

Recently, a decisive impulse has been given to the use, on motor vehicles, of internal-combustion engines of the type currently known as "start/stop", i.e., of the type which are able to stop automatically in the event of a temporary stoppage of the motor vehicle, for example at traffic lights, and to turn back on again when a control member of the motor vehicle, for instance the clutch, is activated by the driver.

Engines of the above type are not very suited for co-operating with integrated assemblies of the type described above, in so far as turning-off of the internal-combustion engine would cause, during the interval of stoppage, the impossibility of actuating the auxiliary members connected to the pulley, for example, the compressor of the air-conditioning system.

EP 0 740 077 A discloses an integrated pulley-torsional damper assembly for selectively driving a compressor, having a hub connected to a driven shaft of the compressor, a pulley radially supported by a housing of the compressor, and an annular member connected to the hub by means of an elastic ring and configured to selectively cooperate with the pulley to couple the pulley to the hub under the action of a solenoid clutch.

FR 2 771 791 A discloses an integrated pulley-torsional damper assembly comprising a hub designed for being rigidly connected to a drive member, a pulley which is radially supported by the hub and can be used for transmitting motion to an auxiliary member, and damping means for damping torsional oscillations including an annular member connected to the hub by means of an elastomeric ring.

The purpose of the present invention is to provide an integrated pulley-damper assembly of an improved type, which will enable the drawback specified above to be overcome in a simple and inexpensive way.

The aforesaid purpose is achieved by the present invention, in so far as it relates to an assembly as claimed in claim 1.

For a better understanding of the present invention, there follows a description of four different preferred embodiments, provided purely by way of non-limiting example, and with reference to the attached drawings, in which:
- Figure 1 illustrates, in a schematic front view, a belt transmission including an integrated pulley-torsional damper assembly built according to the present invention;
- Figures 2 and 3 are radial cross sections, at an enlarged scale, of the integrated pulley-torsional damper assembly of Figure 1, in two different operating conditions;
- Figure 4 illustrates, in radial cross section, a different embodiment of an integrated pulley-torsional damper assembly according to the present invention;
- Figures 5 and 6 illustrate, in radial cross section, a further embodiment of an integrated pulley-torsional damper assembly according to the present invention, in two different operating conditions; and
- Figure 7 illustrates, in radial cross section, a further embodiment of an integrated pulley-torsional damper assembly according to the present invention.

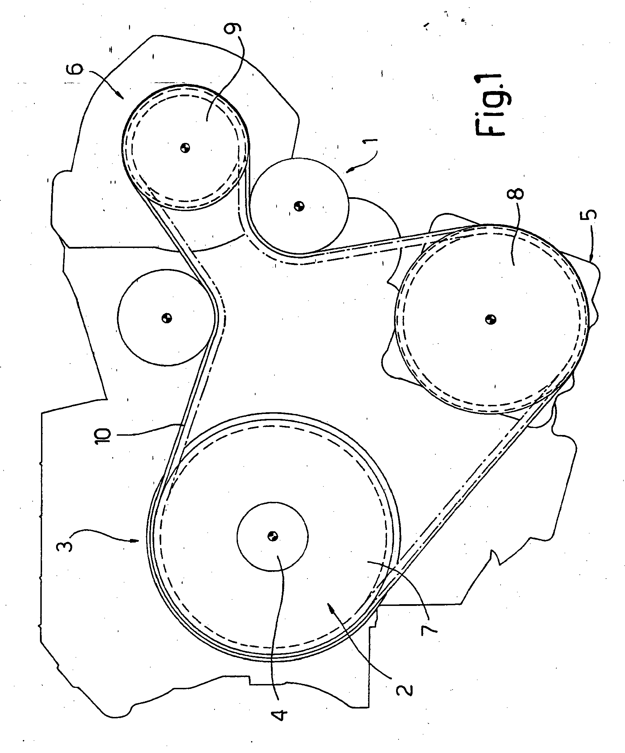

With reference to Figure 1, number 1 designates, as a whole, a belt transmission including an integrated pulley-torsional damper assembly 2 built according to the present invention.

The transmission 1 is preferably but not exclusively suitable for being employed in an internal-combustion engine of a motor vehicle (which is in itself known and is illustrated only partially in Figure 1) for connection of a drive member 4, for example, the drive shaft or a gear of the distribution rigidly constrained thereto, to auxiliary members of the engine 3, such as a compressor 5 of an air-conditioning system and an electrical machine 6 designed to function both as an alternator and as an auxiliary electric motor.

In greater detail, the transmission 1 comprises a first pulley 7 forming part of the pulley-torsional damper assembly 2 and carried by the drive member 4, a second pulley 8, which is angularly connected to an input shaft of the compressor 5, a third pulley 9, which is angularly connected to a rotor of the electrical machine 6, and a belt 10 wound around the pulleys 7, 8, and 9.

As will emerge clearly form the ensuing detailed description of the pulley-torsional damper assembly 2 built according to the present invention, the transmission 1 is particularly suited for being used for motor vehicles equipped with internal-combustion engines of the start/stop type, in that it enables driving of the compressor 5 both by the drive member 4 and, in the case of stoppage of the internal-combustion engine, by the electrical machine 6 operating as auxiliary electric motor.

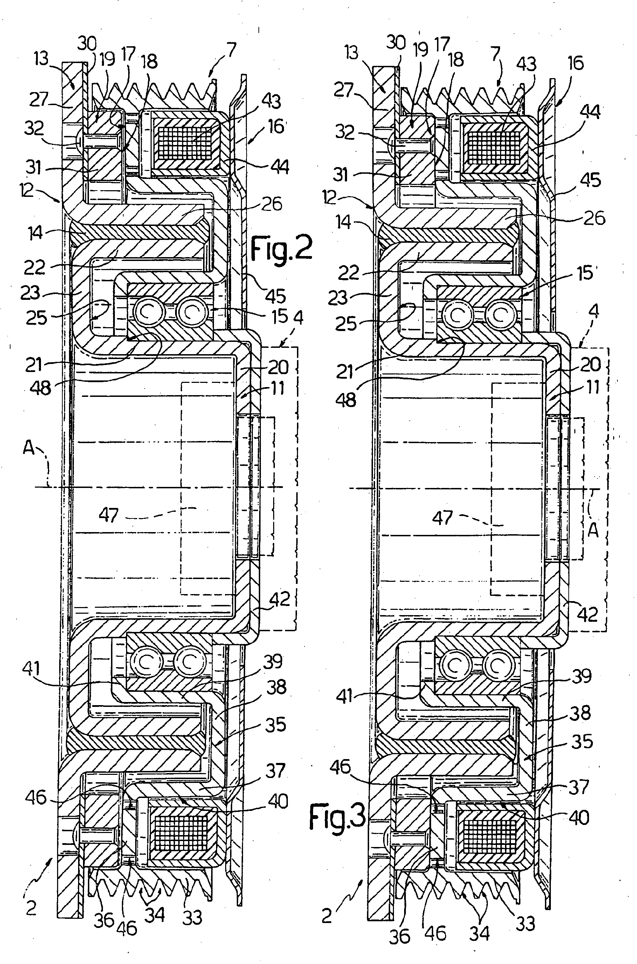

With reference to Figures 2 and 3, the assembly 2, which has an axis of symmetry indicated by A, comprises, in addition to the pulley 7, a hub 11, which is designed to be rigidly connected to the drive member 4 and radially supports the pulley 7, and damping means 12 for damping the torsional oscillations of the drive member 4, the said damping system 12 consisting of an inertia ring 13 connected to the hub 11 by means of an annular element 14 made of elastomeric material (hereinafter referred to simply as "elastomeric ring 14") . As may be noted from Figures 2 and 3, the pulley 7 and the inertia ring 13 are radially supported by the hub 11 in positions that are axially facing one another.

The inertia ring 13 and the elastomeric ring 14 are sized, in terms of moment of inertia of the former and torsional elasticity of the latter, to obtain pre-set damping characteristics of the torsional oscillations of the drive member 4.

According to an important characteristic of the present invention, the pulley 7 is mounted in an angularly free way on the hub 11 with interposition of a bearing 15, for example a ball bearing, and the assembly 1 further comprises a coupling 16 for generating an electromagnetic field, the said device 16 being supported in a fixed position by the engine 3 and being selectively activatable for attracting and coupling together by friction the end surface 17 of the pulley 7 and the end surface 18 of a coupling assembly 19 carried by the inertia ring 13. In this way, in a condition of contact between the end surfaces 17 and 18 (Figure 3) and hence of angular coupling between the pulley 7 and the inertia ring 13, the drive member 4 can drive, during its own rotation, the compressor 5 and the electrical machine 6 operating as alternator, whereas, in a condition of release between the end surfaces 17, 18 (Figure 2) and hence of release between the pulley 7 and the inertia ring 13, which can be obtained, for instance, in the case of the internal-combustion engine 3 being turned off, the compressor 5 can be driven by the electrical machine 6 operating as auxiliary motor.

In greater detail, the hub 11 is made of stamped sheet metal and comprises integrally a plane annular internal flange 20 designed for connection to the drive member 4, a cylindrical internal tubular wall 21 extending axially on the side opposite to the drive member 4, an external tubular wall 22, which is also cylindrical, coaxial to the internal tubular wall 21, and a plane annular end wall 23 integrally connecting the internal tubular wall 21 and the external tubular wall 22 together. The tubular walls 21, 22 and the end wall 23 form, as a whole, an annular coupling portion of the hub 11, which has a substantially C-shaped cross section, open on the side where the flange 20 is located and which defines an annular cavity 25.

The inertia ring 13, conveniently made of steel, integrally comprises a cylindrical internal tubular portion 26, which is mounted on the external tubular wall 22 of the hub 11 with interposition of the elastomeric ring 14, which has the shape of a tubular sleeve, and a plane disk-like portion 27, which extends integrally outwards from a free axial end of the internal tubular portion 26 set on the side where the end wall 23 of the hub 11 is located.

Mounting of the internal tubular portion 26 of the inertia ring 13 on the external tubular wall 22 of the hub 11 is obtained, for instance, by means of a mechanical drive fit, with radial forcing of the elastomeric ring 14. The inertia ring 13 is then withheld on the external tubular wall 22 of the hub 11 exclusively as the result of the friction generated by the radial compression of the elastomeric ring 14. Alternatively, fixing between the internal tubular portion 26 of the inertia ring 13 and the external tubular wall 22 of the hub 11 could be obtained by hot adhesion or injection.

The coupling assembly 19 comprises a pair of annular disks 30, 31, which are conveniently made of steel, constrained together by a plurality of rivets 32, and fixed in a conventional way, for example by further rivets (not illustrated), on one face of the disk-like portion 27 of the inertia ring 13 facing the side on which the tubular portion 26 extends. The disk 30 is set between the disk-like portion 27 of the inertia ring 13 and the disk 31, and has a particularly small thickness as compared to the other dimensions and to the thickness of the disk 31 so as to assume high axial flexibility and high torsional stiffness.

The disk 31 defines, at its own free end, the end surface 18 designed for co-operating by friction with the end surface 17 of the pulley 7 facing it, and has a high permeability to the electromagnetic field generated by the device 16 so as to maximize the effects of said field on the disk 30, determining its flexure towards the pulley 7 and thus ensuring the best possible contact between the end surfaces 17 and 18.

The pulley 7, which is, in the case in point, of the type having multiple grooves or races (poly-V type), is conveniently made of sheet metal by means of successive pressing and rolling operations and comprises integrally a substantially cylindrical peripheral crown 33, which defines, on one of its outer surfaces, a plurality of V-shaped grooves 34, and an annular flange 35, which extends integrally inwards from the crown 33 so as to divide the crown 33 into two parts, of which one is axially shorter and is set around the disk 31.

The flange 35 comprises, starting from the crown 33 and proceeding towards the axis A, a plane annular outer disk-like portion 36, facing the disk 31 and defining, towards said disk 31, the end surface 17, a cylindrical intermediate tubular portion 37, which extends coaxially to the crown 33 starting from an internal radial end of the external disk-like portion 36 and is set, with radial play, outside the internal tubular portion 26 of the inertia ring 13, a plane annular intermediate disk-like portion 38, which extends from an axial end of the intermediate tubular portion 37 and in a position facing the free axial ends of the internal tubular portion 26 of the inertia ring 13, of the elastomeric ring 14 and of the external tubular wall 22 of the hub 11, and a cylindrical internal tubular wall 39, which extends coaxially to the crown 33 and to the intermediate tubular portion 37, starting from an internal radial end of the intermediate disk-like portion 38, and is housed, with radial play, inside the cavity 25 of the hub 11. As may be seen from Figures 2 and 3, the crown 33, the external disk-like portion 36, and the intermediate tubular portion 37 of the flange 35 delimit between them an annular cavity 40 for housing the device 16, the said cavity 40 being opened on the side where the intermediate disk-like portion 38 is located and hence along the same side of the cavity 25 of the hub 11.

More precisely, the device 16 is basically made up of a coil 43 housed inside an annular casing 44, which in turn engages, with play, the cavity 40 of the pulley 7 and is carried in cantilever fashion by an annular flange 45 fixed to the engine 3 in a conventional way (not illustrated).

The external disk-like portion 36 is provided with a plurality axial radial through holes 46, which are angularly distributed about the axis A and have the dual function of enabling aeration, and hence cooling in use, of the device 16, as well as the function of guiding the magnetic flux generated by the coil 43, when the latter is excited, towards the coupling assembly 19.

The bearing 15 is mounted between the internal tubular wall 21 of the hub 11 and the internal tubular wall 39 of the pulley 7, and is axially blocked between the walls 21 and 39 themselves. In greater detail, an axial end of the bearing 15, which faces towards the inside of the cavity 25 of the hub 11, is set so that it bears externally upon an annular shoulder 48 of the internal tubular wall 21 of the hub 11 adjacent to the end wall 23, and internally upon an angular projection 41, which extends radially towards the inside from one free end of the internal tubular wall 39 of the pulley 7. The opposite axial end of the bearing 15 is, instead, set so that it bears internally upon one end of an annular flange 42, which is substantially shaped like a cylindrical cup and is mounted on the internal flange 20 and on a stretch of the internal tubular wall 21 of the hub 11 adjacent to the internal flange 20.

In particular, the flanges 20 and 42 are pack-tightened together by means of a single screw 47 having an axis A, the said screw 47 being axially screwed into the drive member 4. The screw 47 provides rigid coupling of the hub 11 on the drive member 4.

In use, in the absence of excitation of the coil 43 of the device 16, the end surface 17 of the pulley 7 and the end surface 18 of the coupling assembly 19 fixed to the inertia ring 13 are detached from one another, and the pulley 7 is thus free to rotate about its own axis A with respect to the hub 11 and to the drive member 4 and can be used for transmitting motion to the compressor 5 by the electrical machine 6 operating as auxiliary electric motor. The said operating condition may be used for actuating the compressor 5 or other possible auxiliary members of the internal-combustion engine 3 in the event of temporary stoppage of the engine 3 itself.

When the coil 43 is excited, an electromagnetic field is generated, which tends to attract, towards the coil 43 itself, the parts of the assembly 2 facing it, i.e., the external disk-like portion 36 of the pulley 7, the coupling assembly 19 and the disk-like portion 27 of the inertia ring 13.

The aforesaid electromagnetic field does not have any effect on the pulley 7, in so far as the latter is axially blocked, by means of the bearing 15, between the flange 42 and the shoulder 48 of the internal tubular wall 21 of the hub 11. Otherwise, thanks to the deformability of the elastomeric ring 14, the inertia ring 13, and, together therewith, the coupling assembly 19 undergo a slight axial displacement in the direction of the external disk-like portion 36 of the pulley 7 until the end surface 18 of the disk 31 is brought into contact with the end surface 17 of the pulley 7. In addition, as a result of the electromagnetic field generated by excitation of the pulley 43, the disk 30 tends to bend axially towards the disk-like portion 36 of the pulley 7, ensuring a high contact pressure between the end surfaces 17 and 18. In this way, the pulley 7 is angularly coupled to the hub 11 and to the drive member 4 and consequently enables driving, via the drive member 4, of the compressor 5 and the electrical machine 6, which operates as alternator. In this operating condition, the inertia of the coupling assembly 19 and that of the pulley 7 are added to the inertia of the inertia ring 13. It is therefore possible, given the high total inertia obtainable, to use, for making the inertia ring 13 and the coupling assembly 19, relatively light components, thus reducing the costs linked thereto.

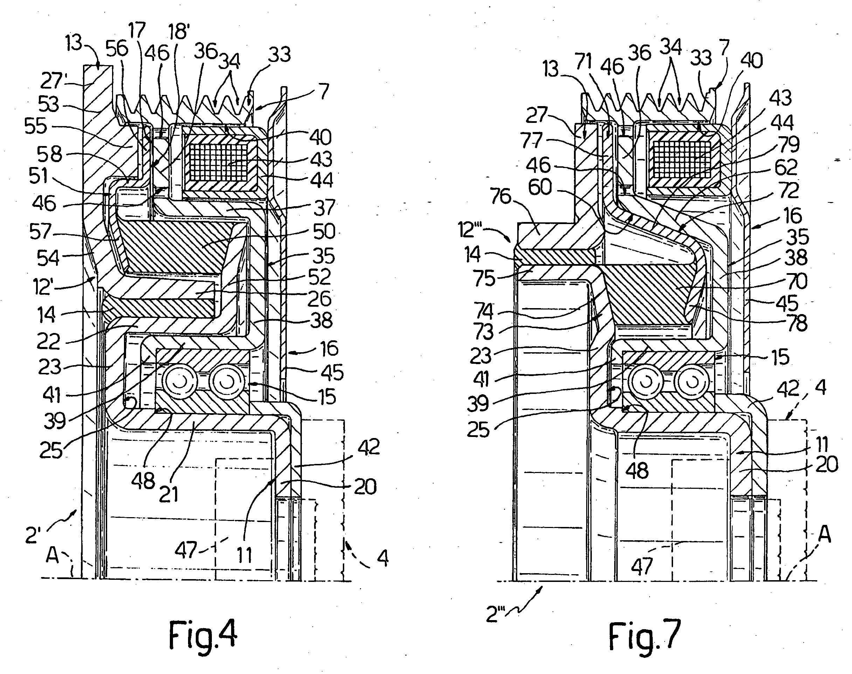

Figure 4 illustrates a different example of embodiment of an integrated pulley-torsional damper assembly built according to the present invention and designated, as a whole, by 2'. This assembly is described in what follows only as regards the points in which it differs from the assembly 2, parts that are the same or correspond to parts that have already been described being designated by the same reference numbers.

In particular, the assembly 2' differs from the assembly 2 basically in that it comprises a system 12' for filtering the torsional oscillations of the drive member 4, the said system including a first elastomeric ring 14, which connects together the hub 11 and the inertia ring 13, and a second elastomeric ring 50, which connects the hub 11 to an annular coupling flange 51, which is designed to couple by friction with the end surface 17 of the pulley 7 as a result of the electromagnetic field generated by excitation of the coil 43.

In particular, the coupling flange 51 extends in a position between a disk-like portion 27', similar to the disk-like portion 27 of the inertia ring 13, and the disk-like portions 36, 38 and the tubular portion 37 of the pulley 7, and the elastomeric ring 50 has opposite axial ends coupled with the coupling flange 51 and with an end disk-like appendage 52 of the hub 11, which extends towards the outside from a free axial end of the external tubular wall 22.

In greater detail, the disk-like portion 27' of the inertia ring 13 differs from the disk-like portion 27 previously described in that it is basically formed by a plane end stretch 53 facing the external disk-like portion 36 of the pulley 7 and by a slightly conical stretch 54, which radiuses the plane stretch 53 with the internal tubular portion 26 and delimits with the latter an obtuse angle. In this case, the disk-like portion 27' is without the coupling assembly 19 and has, in an area corresponding to the plane stretch 53, an annular projection 55, which protrudes in the direction of the coupling flange 51 and of the external disk-like portion 36 of the pulley 7. The projection 55 contributes to increasing the amount of metal present in the area of the disk-like portion 27' facing the coil 43 in order to obtain, during excitation of the coil 43, an increase in the magnetic flux. This enables limitation of the amount of energy necessary for obtaining angular coupling between the pulley 7 and the hub 11.

The coupling flange 51 comprises a plane external annular wall 56, which is set between the external disk-like portion 36 of the pulley 7 and the projection 55 of the inertia ring 13 and which defines an end surface 18' similar to the end surface 18 of the assembly 2 and designed to engage by friction with the end surface 17 of the pulley 7. The coupling flange 51 further comprises an internal annular wall 57, which is, for example, conical and basically has the same profile as the conical stretch 54 of the disk-like portion 27' of the inertia ring 13, coupled to an axial end of the elastomeric ring 50 and radiused to the external annular wall 56 by a step-like intermediate portion 58, which develops about the internal profile of the projection 55.

The end disk-like appendage 52 of the hub 11 has a substantially conical conformation and faces, on one side, the intermediate disk-like portion 38 of the pulley 7, and, on the opposite side, the internal annular wall 57 of the coupling flange 51, from which it diverges outwards.

On account of the conicity of the internal annular wall of the coupling flange and of the end appendage of the hub 11, the elastomeric ring 50 has a substantially trapezoidal cross section, which diverges outwards.

Operation of the assembly 2' is similar to that of the assembly 2 described previously. The only difference regards the fact that, during excitation of the coil 43, the electromagnetic field that is generated brings about, on account of the deformability of the elastomeric ring 50, axial displacement of the coupling flange 51 in the direction of the pulley 7 until the end surface 18' is brought into contact with the end surface 17 so as to enable driving via friction of the pulley 7 by the hub 11 and hence by the drive member 4. In this case, the electromagnetic attraction exerted by the coil 43 on the inertia ring 13 produces negligible effects.

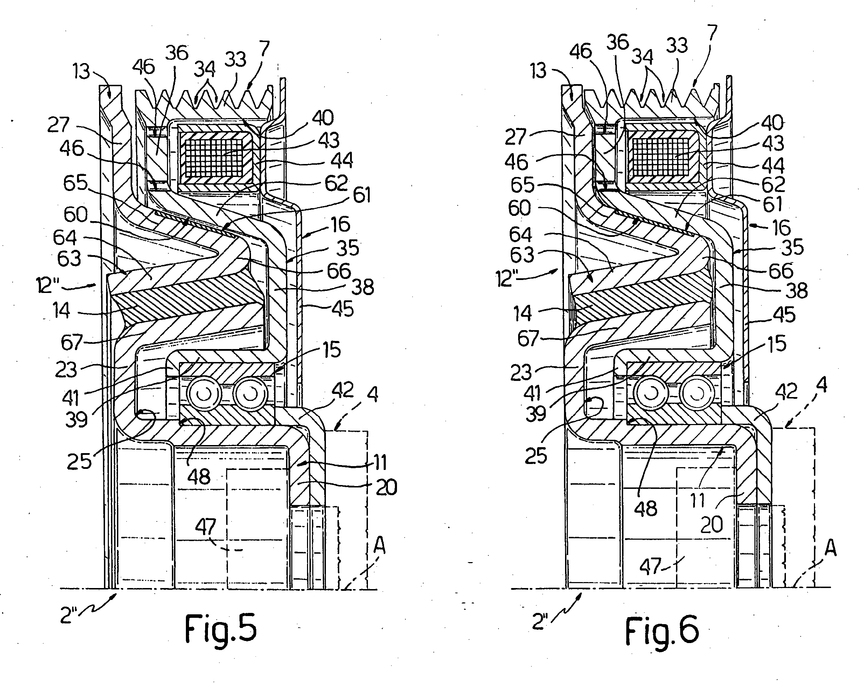

Figures 5 and 6 illustrate a different example of embodiment of an integrated pulley-torsional damper assembly built according to the present invention and designated, as a whole, by 2" . This assembly is described in what follows only as regards the points in which it differs from the assembly 2, parts that are the same or correspond to parts that have already been described being designated by the same reference numbers.

In particular, the assembly 2" differs from the assembly 2 basically in that the pulley 7 and the inertia ring 13 are normally coupled together by mutual friction along respective conical contact surfaces 60, 61, and in that excitation of the coil 43 generates a repulsive electromagnetic force, which tends to move the inertia ring 13 axially away from the pulley 7 and to bring about detachment between the conical surfaces 60, 61.

In greater detail, the pulley 7 has, instead of the cylindrical intermediate tubular portion 37, a conical intermediate tubular portion 62, which radiuses together the external disk-like portion 36 and the intermediate disk-like portion 38, the conical intermediate tubular portion 62 being tapered in the direction of the intermediate disk-like portion 38 and defining internally the conical surface 60.

The inertia ring 13 defines, together with the elastomeric ring 14, a system for damping torsional oscillations, said damping system being designated, as a whole, by 12", and has, instead of the cylindrical internal tubular portions 26, an annular flange 63 formed by two conical walls 64, 65, respectively internal and external, which are joined together along a rounded annular edge 66 facing the pulley 7. More precisely, the internal conical wall 64 has a diameter which increases towards the edge 66, whilst the external conical wall 65 is tapered in the direction of the edge 66 and defines externally the conical surface 61, which is designed to co-operate by friction with the conical surface 60 of the intermediate tubular portion 62 of the pulley 7. A layer of friction material may be provided between the conical surfaces 60, 61 so as to increase the driving action of the pulley 7 by the inertia ring 13.

As may be noted from Figures 5 and 6, the assembly 2" is without the coupling assembly 19, and the disk-like portion 27 of the inertia ring 13 faces directly the external disk-like portion of the pulley 7, which, in the case in point, originates from an axial end of the crown 33 adjacent to the shock ring 13.

The hub 11 has outwards, instead of the cylindrical tubular wall, a conical external tubular portion 67, which presents the same profile as of the inner conical wall 64 of the inertia ring 13 and is connected to the internal conical wall 64 by means of the elastomeric ring 14. Also in this case, assembly of the internal conical wall 64 of the inertia ring 13 on the external tubular wall 67 of the hub 11 is obtained by means of a mechanical drive fit, with radial forcing of the elastomeric ring 14.

In use, in the absence of excitation of the coil 43 of the device 16, the inertia ring 13 is set in a condition of coupling with the pulley 7 (see Figure 6), in which the conical surfaces 60, 61 are set so that they bear upon one another. In this condition, contact between the conical surfaces 60, 61 is ensured by the axial force generated on the inertia ring 13 as a result of compression of the elastomeric ring 14.

The pulley 7 is therefore angularly coupled to the hub 11 and to the drive member 4 and thus enables driving, by the drive member 4 itself, of the compressor 5 and of the electrical machine 6 operating as alternator.

When the coil 43 is excited, an electromagnetic field is generated, which tends to move away axially from the coil 43, the parts of the assembly 2" facing it, i.e., the external disk-like portion 36 of the pulley 7 and the disk-like portion 27 of the inertia ring 13.

The aforesaid electromagnetic field does not have any effect on the pulley 7, in so far as the latter is axially blocked, by means of the bushing 15, between the flange 42 and the shoulder 48 of the internal tubular portion 21 of the hub 11. Otherwise, thanks to the deformability of the elastomeric ring 14, the inertia ring 13 moves away slightly, in an axial direction, from the coil 43, detaching from the pulley 7. Consequently, the conical surfaces 60, 61 separate from one another, defining a condition of release of the pulley 7 from the hub 11 and from the drive member 4. The pulley 7 can therefore be used for transmitting motion to the compressor 5 by the electrical machine 6, which operates as auxiliary electric motor. This operating condition can be used for actuation of the compressor 5 or of other possible auxiliary members of the internal-combustion engine 3 in the case of temporary stoppage of the engine 3.

Figure 7 illustrates a different example of embodiment of an integrated pulley-torsional damper assembly built according to the present invention and designated, as a whole, by 2'". This assembly is described in what follows only as regards the points in which it differs from the assembly 2", parts that are the same or correspond to parts that have already been described being designated by the same reference numbers.

In particular, the assembly 2'" differs from the assembly 2" basically in that it comprises, like the assembly 2', a system 12"' for filtering the torsional oscillations of the drive member 4, which includes a first elastomeric ring 14, which connects the hub 11 to the inertia ring 13, and a second elastomeric ring 70, which connects the hub 11 to an annular coupling flange 71 defining a conical surface 72, which is designed to couple by friction with the conical surface 70 of the pulley 7.

In greater detail, the hub 11, instead of being bent towards the pulley 7 so as to form the external tubular wall 67, is bent in the opposite way so as to form an annular flange 73 having a substantially L-shaped cross section. More precisely, the flange 73 comprises a first disk-like portion 74, which extends on the prolongation towards the outside of the end wall 23 in a position facing the intermediate disk-like portion 38 of the pulley 7 and in a slightly divergent way from the intermediate disk-like portion 38 itself, and a second cylindrical tubular portion 65, which extends in a direction opposite to the intermediate disk-like portion 38 of the pulley 7, starting from an external radial end of the portion 74.

The inertia ring 13 has, instead of the flange 63 of the assembly 2", a cylindrical tubular portion 76, which extends from an internal radial end of the disk-like portion 27 in a direction opposite to that of the pulley 7 and is connected to the tubular portion 75 of the hub 11, by means of the elastomeric ring 14.

The coupling flange 71 extends in a position between the inertia ring 13 and the pulley 7, and the elastomeric ring 70 has opposite axial ends coupled with the flange 71 itself and with the portions 74 of the hub 11.

In greater detail, the coupling flange 71 comprises a plane external annular wall 77 set between the external disk-like portion 36 of the pulley 7 and the disk-like portion 27 of the inertia ring 13, a slightly conical internal annular wall 78 coupled to an axial end of the elastomeric ring 70, the opposite axial end of which is coupled to the portion 74 of the hub 11, and a conical intermediate tubular wall 79, which radiuses together the walls 77 and 78, the said wall 79 having substantially the same profile as the intermediate tubular portion 62 of the pulley 7 and defining externally the conical surface 72 for coupling to the conical surface 60.

On account of the conicity of the internal annular wall 78 of the coupling flange 71 and of the portion 74 of the hub 11, the elastomeric ring 70 has a substantially trapezoidal cross section, which diverges outwards.

Operation of the assembly 2"' is altogether similar to that of the assembly 2" described previously. The only difference regards the fact that, in conditions of absence of excitation of the coil 43, driving of the pulley 7 by the drive member 4 is obtained via coupling of the conical surface 60 of the pulley 7 to the conical surface 72 of the coupling flange 71, instead of to the inertia ring 13. In the aforesaid coupling condition, contact between the conical surfaces 60, 72 is ensured by the axial force generated on the coupling flange 71 as a result of the compression of the elastomeric ring 70. Since, in the case of use of the assembly 2'" on a motor vehicle equipped with an internal-combustion engine of the start/stop type, the pulley 7 is angularly coupled to the drive member 4 for approximately 95% of the time of use of the motor vehicle, the obtaining of said coupling as a result of the elastic force exerted by the elastomeric ring 70 and not as a result of the magnetic force, as in the case of the embodiments illustrated in Figures 2, 3 and 4, enables a considerable saving in electrical energy.

Upon angular coupling of the pulley 7 with the hub 11 and hence with the drive member 4, any possible torque peaks are damped by the elastomeric ring 70. The same occurs in the case of the assembly 2' illustrated in Figure 4 by means of the elastomeric ring 50.

In the condition of excitation of the coil 43, the electromagnetic field that is generated has appreciable effects exclusively on the coupling flange 71, which is pushed towards the inertia ring 13 until detachment between the conical surfaces 70, 72 is produced. The axial displacement of the coupling flange 71 moreover brings about a small increase in the axial compression of the elastomeric ring 70.

From an examination of the characteristics of the assemblies 2, 2', 2", 2"' obtained according to the present invention, the advantages that this enables emerge evidently.

In particular, thanks to the generation of an electromagnetic field between the pulley 7 and an annular element 31, 51, 13, 71 connected to the hub 11 by means of a corresponding elastomeric ring 14, it is possible, by exploiting the deformability of the elastomeric ring 14, to displace the aforesaid annular element axially away from or towards the pulley 7 to decouple it from the hub 11 and hence from the drive member 4 or to couple it to them.

The assemblies 2, 2', 2", 2"' may thus be used in automotive applications for performing the following functions:
- enabling driving, by the internal-combustion engine of the motor vehicle, of auxiliary members of the engine itself;
- enabling damping of the torsional oscillations of the drive shaft; and
- enabling driving of the auxiliary members of the internal-combustion engine of the motor vehicle, in the event of temporary arrest of the engine itself.

The assemblies 2, 2' , 2", 2"' are hence particularly suited for being used on motor vehicles equipped with internal-combustion engines of the start/stop type.

Finally, it is clear that modifications and variations can be made to the assemblies 2, 2' , 2", 2"' described herein, without thereby departing from the sphere of protection of the ensuing claims.

## Claims

1. An integrated pulley-torsional damper assembly (2, 2', 2", 2"') for a motor vehicle comprising a hub (11) designed for being rigidly connected to a drive member (4), a pulley (7), which is radially supported by the hub (11) and can be used for transmitting motion to an auxiliary member (5), and damping means (12, 12', 12", 12"') for damping torsional oscillations, said damping means, in turn, including at least one annular element (13,51,71) connected to said hub (11) by means of at least one elastomeric ring (14, 50, 70), the assembly being **characterized in that** said pulley (7) is mounted in an angularly free way on said hub (11) and **in that** it further comprises means for angular coupling (16,17, 18, 18', 60, 61, 72) between said pulley (7) and said annular element (13, 51, 71), which can be selectively activated or deactivated for enabling, in the activaled, coupling condition, driving of said hub (11) by said pulley (7), and, in the deactivated, release condition free rotation of said pulley (7) on said hub (11).

2. The assembly according to Claim 1, **characterized in that** said coupling comprise first and second interaction means (17, 60; 18, 18', 61, 72) carried, respectively, by said pulley (7) and by said annular element (13, 51, 71), and means for generating an electromagnetic field (16) selectively activatable for generating an electromagnetic force between said first and second interaction means (17, 60; 18, 18', 61, 72).

3. The assembly according to Claim 2, **characterized in that** said electromagnetic force is a force of attraction for selectively coupling said first and second interaction means (17; 18, 18').

4. The assembly according to Claim 2, **characterized in that** said electromagnetic force is a force of repulsion for selectively decoupling said first and second interaction means (60; 61, 72).

5. The assembly according to any one of Claims 2 to 4, **characterized in that** said first and second interaction means (17, 60; 18, 18', 61, 72) comprise, respectively, a first surface (17, 60) and a second surface (18, 18', 61, 72), which can be coupled together by friction.

6. The assembly according to Claim 5, **characterized in that** said first surface (17) and said second surface (18, 18') are plane surfaces.

7. The assembly according to Claim 5, **characterized in that** said first surface (60) and said second surface (61,72) are conical surfaces.

8. The assembly according to any one of the preceding claims, **characterized in that** said annular element is an inertia ring (13) connected to said hub (11) by means of said elastomeric ring (14).

9. The assembly according to any one of Claims 1 to 7, **characterized in that** said damping means comprise an inertia ring (13) connected to said hub (11) by means of said elastomeric ring (14), and **in that** said annular element is a coupling flange (51, 71) set axially between said inertia ring (13) and said pulley (7) and connected to said hub (11) by means of a further elastomeric ring (50, 70).

10. The assembly according to any one of the preceding claims, **characterized in that** said means for generating an electromagnetic field (16) comprising a fixed coil (43) partly housed in an annular cavity (40) of said pulley (7).

## Patentansprüche

1. Integrierte Baugruppe aus Riemenscheibe und Torsionsdämpfer (2, 2', 2", 2"') für ein Kraftfahrzeug, die eine Nabe (11), die dazu ausgeführt ist, starr mit einem Antriebselement (4) verbunden zu werden, eine Riemenscheibe (7), die radial von der Nabe (11) getragen wird und zur Übertragung von Bewegung auf ein Hilfselement (5) verwendet werden kann, und eine Dämpfungseinrichtung (12, 12', 12", 12"') zur Dämpfung von Torsionsschwingungen umfasst, wobei die Dämpfungseinrichtung wiederum wenigstens ein ringförmiges Element (13, 51, 71) umfasst, das mittels wenigstens eines Elastomerrings (14, 50, 70) mit der Nabe (11) verbunden ist, wobei die Baugruppe **dadurch gekennzeichnet ist, dass** die Riemenscheibe (7) in winkelfreier Weise auf der Nabe (11) montiert ist und dass sie ferner zwischen der Riemenscheibe (7) und dem ringförmigen Element (13, 51, 71) Einrichtungen zur Winkelkopplung (16, 17, 18, 18', 60, 61, 72) umfasst, die selektiv aktiviert oder deaktiviert werden können, um im aktivierten gekoppelten Zustand einen Antrieb der Nabe (11) durch die Riemenscheibe (7) und im deaktivierten gelösten Zustand eine freie Rotation der Riemenscheibe (7) auf der Nabe (11) zu ermöglichen.

2. Baugruppe nach Anspruch 1, **dadurch gekennzeichnet, dass** die Kopplung erste und zweite Wechselwirkungseinrichtungen (17, 60; 18, 18', 61, 72), die jeweils durch die Riemenscheibe (7) und durch das ringförmige Element (13, 51, 71) getragen werden, und eine Einrichtung zum Generieren eines elektromagnetischen Feldes (16) umfasst, die selektiv aktivierbar ist, um zwischen den ersten und zweiten Wechselwirkungseinrichtungen (17, 60; 18, 18', 61, 72) eine elektromagnetische Kraft zu generieren.

3. Baugruppe nach Anspruch 2, **dadurch gekennzeichnet, dass** die elektromagnetische Kraft eine Anziehungskraft zum selektiven Koppeln der ersten und zweiten Wechselwirkungseinrichtungen (17; 18, 18') ist.

4. Baugruppe nach Anspruch 2, **dadurch gekennzeichnet, dass** die elektromagnetische Kraft eine Abstoßungskraft zum selektiven Entkoppeln der ersten und zweiten Wechselwirkungseinrichtungen (60; 61, 72) ist.

5. Baugruppe nach einem der Ansprüche 2 bis 4, **dadurch gekennzeichnet, dass** die ersten und zweiten Wechselwirkungseinrichtungen (17, 60; 18, 18', 61, 72) jeweils eine erste Oberfläche (17, 60) und eine zweite Oberfläche (18, 18', 61, 72) umfassen, die durch Reibung miteinander gekoppelt werden können.

6. Baugruppe nach Anspruch 5, **dadurch gekennzeichnet, dass** die erste Oberfläche (17) und die zweite Oberfläche (18, 18') plane Oberflächen sind.

7. Baugruppe nach Anspruch 5, **dadurch gekennzeichnet, dass** die erste Oberfläche (60) und die zweite Oberfläche (61, 72) konische Oberflächen sind.

8. Baugruppe nach einem der vorhergehenden Ansprüche, **dadurch gekennzeichnet, dass** das ringförmige Element ein Trägheitsring (13) ist, der mittels des Elastomerrings (14) mit der Nabe (11) verbunden ist.

9. Baugruppe nach einem der Ansprüche 1 bis 7, **dadurch gekennzeichnet, dass** die Dämpfungseinrichtung einen Trägheitsring (13) umfasst, der mittels des Elastomerrings (14) mit der Nabe (11) verbunden ist, und dass das ringförmige Element ein Kopplungsflansch (51, 71) ist, der zwischen dem Trägheitsring (13) und der Riemenscheibe (7) axial eingesetzt und mittels eines weiteren Elastomerrings (50, 70) mit der Nabe (11) verbunden ist.

10. Baugruppe nach einem der vorhergehenden Ansprüche, **dadurch gekennzeichnet, dass** die Einrichtung zum Generieren eines elektromagnetischen Feldes (16) eine feste Spule (43) umfasst, die teilweise in einem ringförmigen Hohlraum (40) der Riemenscheibe (7) aufgenommen ist.

## Revendications

1. Assemblage d'amortissement de poulie en torsion intégré (2, 2', 2", 2"') pour un véhicule à moteur comprenant un moyeu (11) conçu pour être connecté de façon rigide à un élément d'entraînement (4), une poulie (7), qui est supportée radialement par le moyeu (11) et qui peut être utilisée pour transmettre un mouvement à un élément auxiliaire (5), et un moyen d'amortissement (12, 12', 12", 12"') destiné à amortir des oscillations en torsion, ledit moyen d'amortissement, à son tour, incluant au moins un élément annulaire (13, 51, 71) connecté audit moyeu (11) au moyen d'au moins une bague élastomère (14, 50, 70), l'assemblage étant **caractérisé en ce que** ladite poulie (7) est montée d'une manière libre angulairement sur ledit moyeu (11) et **en ce qu'**il comprend en outre un moyen de couplage angulaire (16, 17, 18, 18', 60, 61, 72) entre ladite poulie (7) et ledit élément annulaire (13, 51, 71), qui peut être sélectivement activé ou désactivé pour permettre, dans l'état de couplage, activé, l'entraînement dudit moyeu (11) par ladite poulie (7), et, dans l'état de libération, désactivé, une rotation libre de ladite poulie (7) sur ledit moyeu (11).

2. Assemblage selon la revendication 1, **caractérisé en ce que** ledit moyen de couplage comprend des premier et deuxième moyens d'interaction (17, 60 ; 18, 18', 61, 72) supportés, respectivement, par ladite poulie (7) et par ledit élément annulaire (13, 51, 71), et un moyen destiné à générer un champ électromagnétique (16) activable sélectivement pour générer une force électromagnétique entre lesdits premier et deuxième moyens d'interaction (17, 60 ; 18, 18', 61, 72).

3. Assemblage selon la revendication 2, **caractérisé en ce que** ladite force électromagnétique est une force d'attraction destinée à coupler sélectivement lesdits premier et deuxième moyens d'interaction (17 ; 18, 18').

4. Assemblage selon la revendication 2, **caractérisé en ce que** ladite force électromagnétique est une force de répulsion destinée à découpler sélectivement lesdits premier et deuxième moyens d'interaction (60 ; 61, 72).

5. Assemblage selon l'une quelconque des revendications 2 à 4, **caractérisé en ce que** lesdits premier et deuxième moyens d'interaction (17, 60 ; 18, 18', 61, 72) comprennent, respectivement, une première surface (17, 60) et une deuxième surface (18, 18', 61, 72), qui peuvent être couplées ensemble par frottement.

6. Assemblage selon la revendication 5, **caractérisé en ce que** ladite première surface (17) et ladite deuxième surface (18, 18') sont des surfaces planes.

7. Assemblage selon la revendication 5, **caractérisé en ce que** ladite première surface (60) et ladite deuxième surface (61, 72) sont des surfaces coniques.

8. Assemblage selon l'une quelconque des revendications précédentes, **caractérisé en ce que** ledit élément annulaire est une bague à inertie (13) connectée audit moyeu (11) au moyen de ladite bague élastomère (14).

9. Assemblage selon l'une quelconque des revendications 1 à 7, **caractérisé en ce que** ledit moyen d'amortissement comprend une bague à inertie (13) connectée audit moyeu (11) au moyen de ladite bague élastomère (14), et **en ce que** ledit élément annulaire est une bride de couplage (51, 71) disposée axialement entre ladite bague à inertie (13) et ladite poulie (7) et connectée audit moyeu (11) au moyen d'une autre bague élastomère (50, 70).

10. Assemblage selon l'une quelconque des revendications précédentes, **caractérisé en ce que** ledit moyen destiné à générer un champ électromagnétique (16) comprend une bobine fixe (43) partiellement logée dans une cavité annulaire (40) de ladite poulie (7).
